# EUROPÄISCHE PATENTSCHRIFT

(11) **EP 2 879 770 B1**
(45) Veröffentlichungstag und Bekanntmachung des Hinweises auf die Patenterteilung: **14.09.2016**
(21) Anmeldenummer: 13740299.6
(22) Anmeldetag: 25.07.2013
(51) Int. Cl.: B01D 25/164, B01D 25/30, B01D 25/28, B01D 25/21, B01D 29/05

(54) **MEMBRAN FÜR EINE MEMBRANFILTERPLATTE UND ANORDNUNG VON ZWEI FILTERPLATTEN**
MEMBRANE FOR A MEMBRANE FILTER PLATE AND ARRANGEMENT OF TWO FILTER PLATES
MEMBRANE POUR UNE PLAQUE FILTRANTE À MEMBRANE ET DISPOSITION DE DEUX PLAQUES FILTRANTES

(30) Priorität: 30.07.2012 DE 202012007354 U
(43) Veröffentlichungstag der Anmeldung: 10.06.2015
(73) Patentinhaber: JVK Filtration Systems GmbH, 91166 Georgensgmünd (DE)
(72) Erfinder: HERMANN, Manfred P., 90491 Nürnberg (DE); SALBAUM, Bernhard, 91187 Röttenbach (DE)
(74) Vertreter: Reitstötter Kinzebach
(86) Internationale Anmeldenummer: PCT/EP2013/065674
(87) Internationale Veröffentlichungsnummer: WO 2014/019921

(56) Entgegenhaltungen:
- WO-A1-01/37964
- WO-A1-2004/067143
- DE-U1-202005 006 681
- US-A- 3 737 041

## Beschreibung

Die vorliegende Erfindung betrifft eine Membran für eine Membranfilterplatte mit einer elastischen Pressfläche und einem randseitigen Befestigungsmittel. Ferner betrifft die Erfindung eine Anordnung von zumindest zwei Filterplatten, von denen eine Filterplatte eine Membranfilterplatte mit einer Membran ist.

Es ist bekannt, für eine Filterpresse ein Filterpaket zu bilden, welches aus mehreren paarweise nebeneinander angeordneten Filterplatten besteht. Zwischen den Filterplatten werden jeweils Filterkammern gebildet. Die Filterplatten weisen hierfür eine zentrale Filterfläche und einen die zentrale Filterfläche umrahmenden dickeren Dichtrand auf. In der Filterpresse können die Filterplatten voneinander weg und aufeinander zu verfahren werden, wodurch die Filterkammern geöffnet und geschlossen werden können.

Jede Filterkammer weist üblicherweise zumindest einen Einlauf und einen Auslauf auf. Über den Einlauf fließt die zu filternde Suspension, welche üblicherweise als Trübe bezeichnet wird, in die Filterkammer hinein. Die Suspension wird dann mittels eines Filtertuchs gefiltert, wobei die Feststoffe durch das Filtertuch in der Filterkammer zurückgehalten werden, so dass ein sogenannter Filterkuchen entsteht. Das von den Festkörpern befreite Filtrat wird über den Auslauf aus der Filterkammer herausgeleitet.

Um die Restfeuchte im Filterkuchen zu reduzieren und die Filtrationszeiten zu verkürzen, sind Filterpressen bekannt, bei denen eine Filterplatte eine Membran aufweist, welche die Filterkammer von einer Seite begrenzt. Eine solche Filterplatte bezeichnet man als Membranfilterplatte. Bei einer Filterpresse mit Membranfilterplatten schließt sich an die zunächst durchgeführte Druckfiltration eine Pressfiltration an, bei der die elastischen Membranen der Filterkammern mit einem Druckmedium beaufschlagt werden, so dass sie den Raum, in welchem sich der Filterkuchen befindet, verengen. Auf diese Weise wird der Filterkuchen komprimiert, wodurch die Hohlräume des Filterkuchens verkleinert werden und dadurch die Restfeuchte in diesen Hohlräumen weiter verringert wird.

Eine solche Filterpresse ist beispielsweise in der WO 03/095063 A1 beschrieben. Bei der dort beschriebenen Filterpresse wird ein Plattenpaket gebildet, welches abwechselnd eine Filterplatte und eine Membranfilterplatte aufweist. Die Filterplatte weist auf beiden Seiten jeweils ein Filtertuch auf, welches jeweils in einer Aussparung des Grundkörpers der Filterplatte befestigt ist. Die Membranfilterplatte weist auf beiden Seiten jeweils eine Membran auf, welche an dem Grundkörper befestigt ist.

Der Einlauf der Trübe in die Filterkammer erfolgt bei diesem Plattenpaket über einen Einlaufkanal in der Filterplatte, die nicht die Membran umfasst. Dieser Einlaufkanal führt von der Stirnseite der Filterplatte durch den Plattenrand hindurch in das Innere der Filterplatte hinein. Dort endet der Einlaufkanal in einem T-förmigen Endstück, welches von zwei Einlauföffnungen abgeschlossen wird. Die beiden Einlauföffnungen verbinden den Einlaufkanal mit zwei Filterkammern, die an abgewandten Seiten der Filterplatte liegen. Bei der Filterkammer ist gegenüberliegend von der Einlauföffnung die Membran der Membranfilterplatte angeordnet, wobei die Membran in diesem Bereich eben ausgebildet ist, wodurch verhindert wird, dass die Membran bei ausreichend hohem Druck in die Einlassöffnung eindringt.

Eine andere Möglichkeit die Trübe in die Filterkammer einzuleiten ist in der WO 2004/067143 A1 beschrieben. In diesem Fall wird ein Füllschuh zwischen zwei Filterplatten gehalten, zwischen denen die Filterkammer gebildet ist. In dem Füllschuh ist ein Kanal gebildet, durch den die Trübe von außen in die Filterkammer hineingeleitet werden kann. Der Füllschuh weist einen beidseitig abgeflachten Auslauf und einen an diesem schräg angesetzten Stutzen auf. Der Füllschuh ist in einer Aufnahme einer Filterplatte eingesetzt. Diese Aufnahme ist der Form des Stutzens des Füllschuhs angepasst, weist aber gegenüber diesem ein leichtes Spiel auf. Oberhalb des Füllschuhs ist die Membran einer Membranfilterplatte angeordnet. Unterhalb liegt der Füllschuh an der anderen Filterplatte an und wird von dieser abgestützt. Wenn der Füllschuh herausgenommen werden soll, werden die beiden Filterplatten in der Filterpresse auseinandergefahren. Bei diesem Öffnen der Filterkammer verkantet sich der Füllschuh in der Aufnahme der Filterkammer, so dass er nicht herausfällt. Er kann dann von Hand leicht angehoben werden und gleitet daraufhin aus der Aufnahme heraus.

Bei der in der WO 01/37964 A1 beschriebenen Filterplatte ist zumindest ein Befüllelement vorgesehen, um Suspension in die Filterkammer zuzuführen. Dabei sollen Undichtigkeiten am umlaufenden Dichtrand vermieden werden, die Filterleistung soll nicht durch eine Zuführung beeinträchtigt werden und es soll keine externe Versorgungsleitung mit davon abgehenden Verbindungsleitungen benötigt werden. Dazu wird vorgeschlagen, das Befüllelement innerhalb des umlaufenden Dichtrands an einem Ansatzstück anzuordnen, das sich außerhalb des Plattenspiegels erstreckt. Es ist ferner mit einer Filterplatte verbindbar. Dabei bilden die Befüllelemente in der Filtrationsstellung einen Zulaufkanal für die Suspension und sind dichtend zwischen benachbarten Filterplatten eingeklemmt.

Es hat sich nun herausgestellt, dass es bei Anordnungen, bei denen ein separates, zwischen den Filterplatten angeordnetes Einlaufteil verwendet wird, um die Trübe in die Filterkammer einzuleiten, zu einer Verschmutzung der Fugen zwischen dem Einlaufteil und der Membran kommen kann. Außerdem kann die weiche Membran durch das starre Einlaufteil beschädigt werden. Des Weiteren besteht die Gefahr, dass der Einlaufkanal des Einlaufteils verstopft, insbesondere wenn dieser einen Knick aufweist. Schließlich ergibt sich das Problem, dass das Einlaufteil dicht zwischen den benachbarten Filterplatten aufgenommen werden muss, um zu vermeiden, dass Flüssigkeit aus der Filterkammer herausleckt, insbesondere wenn ein sehr hoher Druck auf den Filterkuchen und die Resttrübe in der Filterkammer ausgeübt wird. Schließlich ist das separate Einlaufteil schwierig zu montieren.

Der vorliegenden Erfindung liegt die daher die Aufgabe zugrunde, eine Membran und eine Anordnung der eingangs genannten Art bereitzustellen, mittels welchen es möglich ist, Trübe in eine Filterkammer zwischen zwei Filterplatten einzuleiten, bei denen jedoch eine Beschädigung der Membran und eine Verschmutzung von Fugen bei der Membran vermieden wird. Außerdem soll die Filterkammer zuverlässig nach außen abgedichtet werden können und eine Verstopfung des Kanals in die Filterkammer verhindert werden.

Erfindungsgemäß wird diese Aufgabe durch eine Membran mit den Merkmalen des Anspruchs 1 und eine Anordnung mit den Merkmalen des Anspruchs 8 gelöst. Vorteilhafte Ausgestaltungen und Weiterbildungen ergeben sich aus den abhängigen Ansprüchen.

Die erfindungsgemäße Membran, die für eine Membranfilterplatte geeignet ist, weist eine elastische Pressfläche und ein randseitiges Befestigungsmittel auf. Ferner ist in der Membran eine Öffnung für eine Fluidverbindung in eine Filterkammer ausgebildet. Sie weist außerdem ein Kanalelement auf, das sich aus der von der Membran gebildeten Ebene heraus erstreckt und in dem die Öffnung ausgebildet ist. Dieses Kanalelement ist erfindungsgemäß einteilig mit der Pressfläche und/oder dem Befestigungsmittel ausgebildet.

Herkömmlicherweise wird die Öffnung für die Fluidverbindung in die Filterkammer separat von der Membran bereitgestellt. Beispielsweise wird die Einlauföffnung gegenüberliegend von der Membran von der Filterplatte bereitgestellt, die der Membranfilterplatte gegenüberliegt, wie es beispielsweise in der WO 03/095036 A1 gezeigt ist. Ferner ist es bekannt, ein separates Einfüllteil zwischen zwei Filterplatten aufzunehmen, welches die Fluidverbindung in die Filterkammer bereitstellt. Erfindungsgemäß wird diese Öffnung von der Membran selbst bereitgestellt, so dass ein separates Einlaufteil oder eine separate Ausbildung des Einlaufs in der Filterplatte selbst nicht erforderlich ist. In diesem Fall kann es vorteilhafterweise nicht zu einer Beschädigung der Membran durch ein anliegendes separates Einlaufteil kommen. Auch ergeben sich keine Fugen zwischen der Membran und einem Einlaufteil, die verschmutzen können. Außerdem kann eine sicherere Abdichtung der Filterkammer nach außen gewährleistet werden, da es nicht erforderlich ist, ein separates Einlaufteil gegenüber der Membran abzudichten. Die Gefahr eines Lecks aus der Filterkammer heraus wird somit verringert.

Erfindungsgemäß weist die Membran ein Kanalelement auf, das sich aus der von der Membran gebildeten Ebene heraus erstreckt und in dem die Öffnung ausgebildet ist. Dieses Kanalelement ist einteilig mit der Pressfläche und/oder dem Befestigungsmittel ausgebildet. Das Kanalelement und die Pressfläche und/oder das Befestigungsmittel bestehen insbesondere aus demselben Material. Hierdurch erreicht man, dass die Membran, welche die Öffnung für die Fluidverbindung in die Filterkammer bereitstellt, kostengünstig hergestellt werden kann. Gleichzeitig erreicht man, dass keine weiteren separaten Anbauteile notwendig sind, um die Fluidverbindung in die Filterkammer herzustellen. Schließlich stellt die einteilige Ausbildung der Membran mit dem Kanalelement eine Abdichtung der Filterkammer nach außen sicher. Die erfindungsgemäße Membran kann somit bei einem Plattenpaket einen integrierten Trübeeinlauf bereitstellen. Der Einlauf kann ferner bei jeder beliebigen Stelle der Membran und damit der Filterplatte gebildet werden.

Gemäß einer weiteren Ausgestaltung der erfindungsgemäßen Membran ist das Kanalelement im Randbereich der Membran angeordnet ist. Hierdurch wird eine sichere und ortsfeste Positionierung des Kanalelements gewährleistet.

Das randseitige Befestigungsmittel ist insbesondere ein umlaufender Wulst, der sich auf der Seite der Membran befindet, auf welcher die Membran an der Membranfilterplatte befestigt wird und bei der eine Pressmittelkammer gebildet wird. Das Kanalelement ist dann auf der anderen Seite der Membran gebildet, das heißt auf der Seite der Membran, welche bei der elastischen Pressfläche die Filterkammer begrenzt. Das Kanalelement ist somit insbesondere hinsichtlich der von der Membran gebildeten Ebene gegenüberliegend von dem Befestigungsmittel angeordnet. In diesem Fall ergibt sich somit eine Verdickung der Membran, welche auf einer Seite das randseitige Befestigungsmittel bildet und auf der anderen Seite das Kanalelement mit der Öffnung für die Fluidverbindung in die Filterkammer. Auch hierdurch wird eine sichere und ortsfeste Positionierung des Kanalelements gewährleistet.

Gemäß einer weiteren Ausgestaltung der erfindungsgemäßen Membran ist in dem Kanalelement ein Membrankanal gebildet, der in der Öffnung mündet und durch den Flüssigkeit in die Filterkammer hinein oder aus der Filterkammer heraus leitbar ist. Durch diesen Membrankanal kann somit insbesondere die Trübe in die Filterkammer eingeleitet werden.

Die Erfindung umfasst des Weiteren eine Membranfilterplatte mit einer Membran wie sie vorstehend beschrieben wurde.

Bei der erfindungsgemäßen Anordnung von zumindest zwei Filterplatten ist eine Membran, wie sie vorstehend beschrieben wurde, mittels dem randseitigen Befestigungsmittel an der ersten Filterplatte befestigt, so dass zwischen der Membran und der ersten Filterplatte eine Pressmittelkammer gebildet ist. Bei der ersten Filterplatte handelt es sich somit um eine Membranfilterplatte. Die zweite Filterplatte liegt so an der ersten Filterplatte an, dass zwischen der Pressfläche der Membran und der zweiten Filterplatte eine Filterkammer gebildet ist. Beim Rand der Filterplatten ist zwischen den Filterplatten ein Kanal gebildet, der in Fluidverbindung mit der Öffnung der Membran steht, sodass von außen durch den Kanal über die Öffnung der Membran Flüssigkeit in die Filterkammer einleitbar ist oder von der Filterkammer durch die Öffnung der Membran und den Kanal Flüssigkeit aus der Filterkammer heraus leitbar ist. Der zwischen den Filterplatten ausgebildete Kanal wird somit innerhalb der Membran fortgeführt und mündet in der Filterkammer. Auf diese Weise kann insbesondere die Trübe in die Filterkammer eingeleitet werden, ohne dass weitere Anbauteile, welche die Filterkammer begrenzen, notwendig sind. Vorteilhafterweise ergeben sich somit keine Fugen zwischen der Membran und weiteren Anbauteilen. Außerdem besteht auch nicht die Gefahr einer Beschädigung der Membran durch weitere Anbauteile, welche eine Einlauföffnung für die Trübe bereitstellen. Schließlich wird hierdurch die Montage der Anordnung erleichtert, da kein separates Teil für die Trübeeinlauf zwischen die beiden Filterplatten eingesetzt werden muss.

Bei der erfindungsgemäßen Anordnung ist die Membran insbesondere glatt ausgebildet. Bei der Membran ist auch kein Filtertuch angeordnet. Bei der zweiten Filterplatte kann hingegen ein Filtertuch angeordnet sein, so dass die Filterkammer einerseits von der Membran und andererseits von dem Filtertuch begrenzt ist.

Gemäß einer weiteren Ausgestaltung der erfindungsgemäßen Anordnung weist die Membran, wie vorstehend beschrieben, ein Kanalelement auf, in dem die Öffnung ausgebildet ist. In diesem Fall kann die Anordnung ferner ein Anschlusselement, z. B. einen Einlaufstutzen, umfassen, das von dem Kanalelement der Membran aufgenommen ist. Das Anschlusselement ist insbesondere gedichtet in dem Membrankanal des Kanalelements angeordnet. Alternativ ist das Anschlusselement in dem zwischen den Filterplatten gebildeten Kanal aufgenommen. Das Anschlusselement begrenzt allerdings nicht die Filterkammer, so dass die Gefahr einer Verschmutzung der Fugen zwischen dem Anschlusselement und angrenzenden Teilen durch die Pressfiltration geringer ist.

Das Anschlusselement kann ferner eine Mündungsöffnung bei den Schmalseiten der Filterplatten aufweisen. Über diese Mündungsöffnung kann die Trübe in Richtung der Filterkammer eingeleitet werden.

Die Erfindung wird nun anhand eines Ausführungsbeispiels mit Bezug zu den Zeichnungen erläutert:
- Figur 1: zeigt eine erste Schnittansicht des Randbereichs des Ausführungsbeispiels der erfindungsgemäßen Filterplatte, welche ein Ausführungsbeispiel der erfindungsgemäßen Membran umfasst,
- Figur 2: zeigt eine Schnittansicht des Randbereichs des Ausführungsbeispiels der erfindungsgemäßen Anordnung, welche ein Ausführungsbeispiel der erfindungsgemäßen Membran umfasst,
- Figur 3: zeigt eine zweite Schnittansicht des Randbereichs des Ausführungsbeispiels der erfindungsgemäßen Filterplatte, welche ein Ausführungsbeispiel der erfindungsgemäßen Membran umfasst,
- Figur 4: zeigt einen perspektivischen Schnitt der in Figur 1 gezeigten Filterplatte,
- Figur 5: zeigt einen weiteren perspektivischen Schnitt der in Figur 1 gezeigten Filterplatte,
- Figur 6: zeigt eine perspektivische Ansicht des Anschlusselements der in Figur 1 gezeigten Filterplatte,
- Figur 7: zeigt eine perspektivische Ansicht eines Teils der in Figur 1 gezeigten Filterplatte bei einer Ansicht aus der Richtung der Filterkammer und
- Figur 8: zeigt eine perspektivische Ansicht eines Teils der in Figur 1 gezeigten Filterplatte bei einer Ansicht von außen auf den Randbereich der Filterplatte.

Bei einer Filterpresse wird ein Filterpaket aus mehreren Filterplatten gebildet. Für die Pressfiltration können in einem Filterpaket abwechselnd eine Filterplatte und eine Membranfilterplatte angeordnet sein, Im vorliegenden Ausführungsbeispiel werden jedoch zwei identische Membranfilterplatten verwendet. Die Membranfilterplatten weisen einen umlaufenden dickeren Rand auf, bei dem benachbarte Platten aneinander anliegen. In der Mitte zwischen den Platten ist eine Filterkammer und eine Pressmittelkammer gebildet, die durch die Membran der Membranfilterplatte getrennt sind.

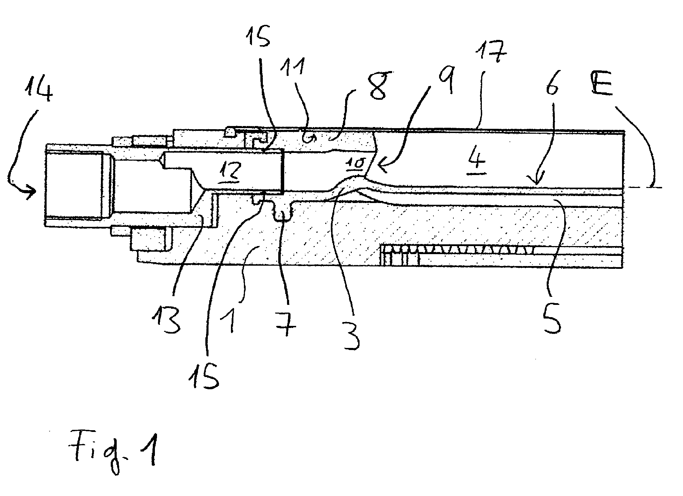

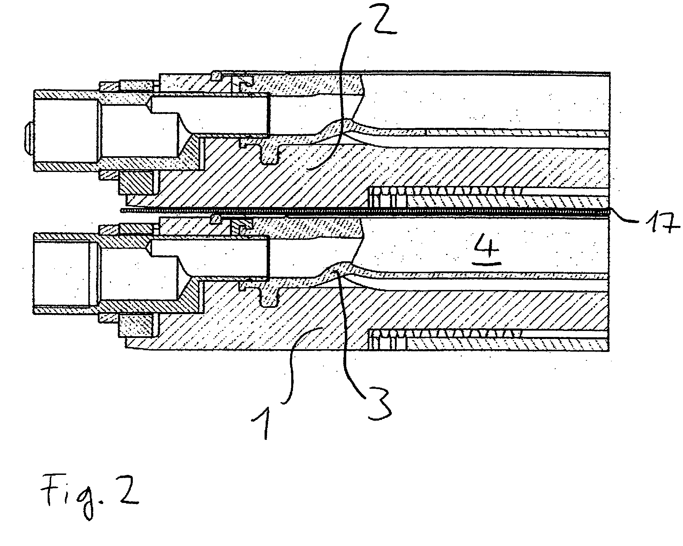

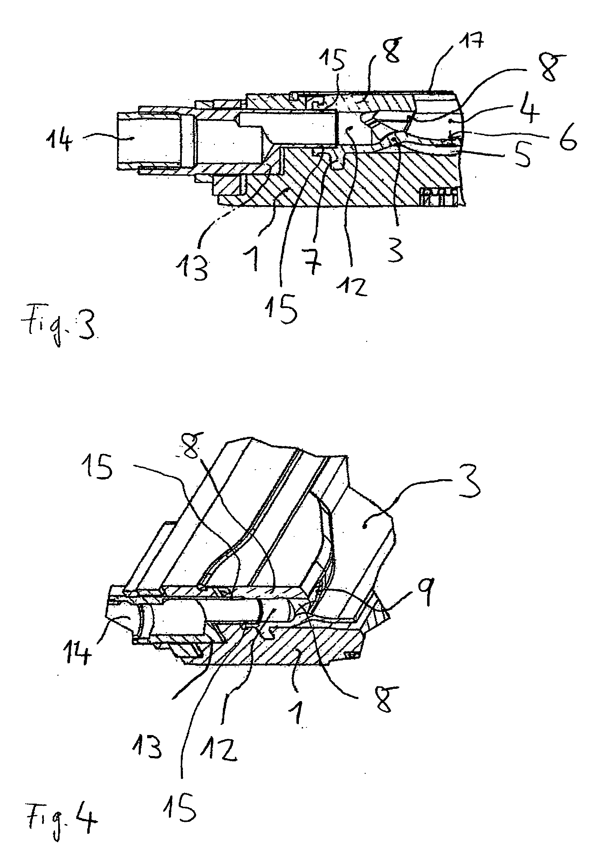

Im Folgenden wird mit Bezug zu den Figuren 1 bis 5 ein Ausführungsbeispiel der erfindungsgemäßen Filterplatte und der Anordnung der Filterplatten erläutert, wobei jeweils nur der Randbereich der Filterplatte bzw. der Anordnung beim Einlauf für die Trübe in die Filterkammer dargestellt ist.

Bei der Anordnung liegt eine erste Filterplatte 1 an einer zweiten Filterplatte 2 an. An der ersten Filterplatte 1 ist eine Membran 3 befestigt, so dass auf an sich bekannte Weise zwischen der Membran 3 und der zweiten Filterplatte 2 eine Filterkammer 4 und zwischen der Membran 3 und der ersten Filterplatte 1 eine Pressmittelkammer 5 gebildet wird. Bei der ersten Filterplatte 1 handelt es sich somit um eine Membranfilterplatte. Zwischen der ersten 1 und der zweiten Filterplatte 2 ist ein Filtertuch 17 auf an sich bekannte Weise angeordnet, welches sich in der Filterkammer 4 befindet.

Die zweite Filterplatte 2 ist bei dem Filtertuch 17 profiliert, so dass die Filtration durch das Filtertuch 17 und die Rillen des Profils der zweiten Filterplatte 2 hindurch erfolgen kann. Die Membran 3 ist hingegen glatt. Bei ihr ist kein Filtertuch vorgesehen.

Die Gesamtform der flächigen Membran 3 richtet sich nach der Form der Filterplatten 1 und 2. Sie ist beispielsweise im Wesentlichen rechteckig mit abgerundeten Ecken. Die Membran 3 besteht aus einem Thermoplast. Sie ist insbesondere im inneren Bereich, der an die Filterkammer 4 und die Pressmittelkammer 5 angrenzt, elastisch, so dass bei einer Beaufschlagung der Pressmittelkammer 5 mit einem Pressmedium die Membran 3 in Richtung der Filterkammer 4 gedrückt wird, um einen Pressdruck auf den Filterkuchen in der Filterkammer 4 beim Betrieb in einer Filterpresse auszuüben. Im Inneren der Membran 3 ist daher eine im Wesentlichen ebene elastische Pressfläche 6 gebildet, welche die Filterkammer 4 begrenzt. Die Membran 3 des beschriebenen Ausführungsbeispiels dient nur dem Ausüben eines Pressdruckes, das heißt sie ist nicht filtrierend und weist daher auch kein Filtertuch auf.

Die Membran 3 bildet insbesondere bei der Pressfläche 6 eine Ebene E. Im Randbereich der Membran 3 ist als Mittel zum Befestigen der Membran 3 an der ersten Filterplatte 1, das heißt an der Membranfilterplatte, ein umlaufender Wulst 7 gebildet, der sich von der Membran 3 in einer Richtung senkrecht zu der Ebene E weg erstreckt. Wenn die Membran 3 an der Filterplatte 1 befestigt ist, wird der Wulst 7 in einer Nut der Filterplatte 1 zur Befestigung der Membran 3 aufgenommen. In diesem Fall wird eine lösbare Verbindung zwischen der Membran 3 und der Filterplatte 1 hergestellt. Es wäre jedoch auch möglich, dass die Membran 3 mittels anderer Befestigungsmittel nicht lösbar an der Filterplatte 1 befestigt ist. Zum Beispiel kann die Membran 3 randseitig an die Filterplatte 1 angeschweißt sein.

Auf der anderen Seite der Membran 3, das heißt auf der Seite der Pressfläche 6, erstreckt sich im Wesentlichen gegenüberliegend von der Wulst 7 aus der von der Membran 3 gebildeten Ebene E ein Kanalelement 8 heraus. Innerhalb des Kanalelements 8 ist ein Membrankanal 10 gebildet, der sich im Wesentlichen parallel zu der Ebene E von außen nach innen bis zu einer Öffnung 9 erstreckt, die sich bei der erfindungsgemäßen Anordnung bei der Filterkammer 4 befindet. Die Öffnung 9 und der Membrankanal 10 stellen somit eine Fluidverbindung in die Filterkammer 4 her, über welche insbesondere Trübe in die Filterkammer 4 eingeleitet werden kann.

Alle Teile der Membran 3, das heißt die Pressfläche 6 und der flächige Bereich der Membran 3, der die Pressfläche 6 bildet, sowie der Wulst 7 und das Kanalelement 8 sind einteilig ausgebildet und bestehen aus demselben Material.

Das Kanalelement 8 ist bei der erfindungsgemäßen Anordnung zwischen der ersten Filterplatte 1 und der zweiten Filterplatte 2 eingeklemmt. Bei der äußersten Fläche 11 des Kanalelements 8 liegt dieses an der zweiten Filterplatte 2 an, wobei ggf. noch das Filtertuch 17 zwischen der äußersten Fläche 11 des Kanalelements 8 und der zweiten Filterplatte 2 eingeklemmt ist. Dabei wird eine flüssigkeitsdichte Begrenzung der Filterkammer 4 hergestellt.

Gemäß einer weiteren Ausgestaltung der erfindungsgemäßen Membran 3 weist diese mehrere Öffnungen 9 für eine Fluidverbindung in die Filterkammer 4 auf. Es sind in diesem Fall insbesondere mehrere separate Kanalelemente 8 ausgebildet, die jeweils Membrankanäle 10 und Öffnungen 9 in die Filterkammer 4 umfassen.

Radial außerhalb von dem Kanalelement 8 wird zwischen den Randbereichen der Filterplatten 1 und 2 ein Kanal 12 gebildet, der in Fluidverbindung mit dem Membrankanal 10 und somit mit der Filterkammer 4 steht. In diesem Kanal 12 ist ein Anschlusselement 13, z. B. ein Einlaufstutzen, eingeführt. Das Anschlusselement 13 erstreckt sich in den Membrankanal 10 hinein, wo es über Dichtungen 15 zu dem Kanalelement 8 abgedichtet ist. Außen endet das Anschlusselement 13 in einer Mündungsöffnung 14.

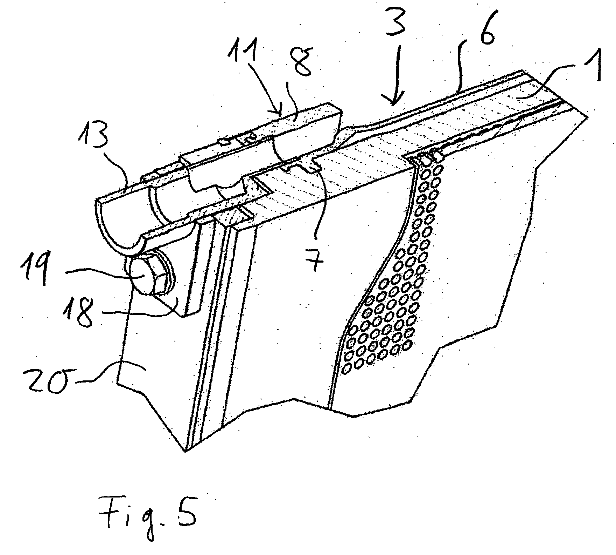

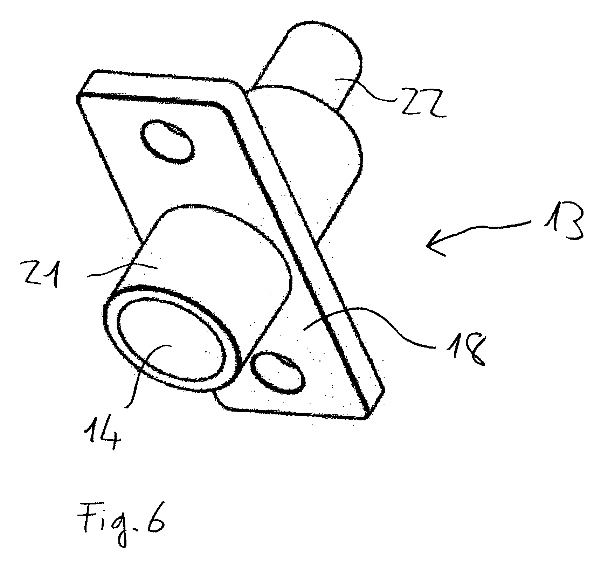

Das Anschlusselement 13 ist im Detail in Figur 6 gezeigt. Es umfasst ein erstes Rohrstück 21 mit größerem Durchmesser und ein zweites Rohrstück 22 mit geringerem Durchmesser. Das erste Rohrstück 21 wird zwischen den beiden Filterplatten 1 und 2 aufgenommen. Das zweite Rohrstück 22 wird dichtend in dem Membrankanal 10 aufgenommen. Bei dem ersten Rohrstück 21 umfasst das Anschlusselement 13 ferner eine Befestigungsplatte 18. Mit dieser Platte 18 ist das Anschlusselement 13 mittels Befestigungsschrauben 19 (siehe Figur 5) an einer Stirnplatte 20 der Filterplatte 1 befestigt. Allgemein kann ein Anschlusselement 13 bei einer oder mehreren Schmalseiten der Filterplatten 1 und 2 angeordnet sein.

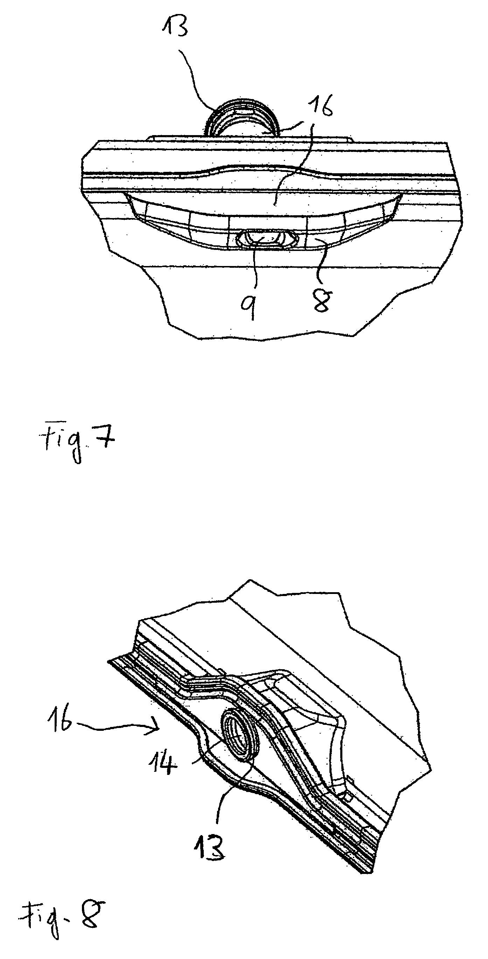

In den Figuren 7 und 8 ist die Einlaufeinheit 16 mit dem Anschlusselement 13, der Mündungsöffnung 14 sowie dem Kanalelement 8 und der Öffnung 9 in die Filterkammer 4 perspektivisch gezeigt. Wenn mehrere Einlaufeinheiten 16 für eine Filterkammer 4 am Rand der Filterplatten 1 und 2 vorgesehen sind, weist die Membran 3 für jede Einlaufeinheit 16 ein Kanalelement 8 mit einem Membrankanal 10 und einer Öffnung 9 in die Filterkammer 4 auf.

Für die Befüllung der Filterkammer 4 wird über die Mündungsöffnung 14 Trübe durch das Anschlusselement 13 eingeleitet. Die Trübe tritt aus dem Anschlusselement 13 aus und in den Membrankanal 10 der Membran 3 ein. Dieser Zulaufkanal 12 des Anschlusselements 13 wird somit innerhalb der Membran 3 fortgeführt, und zwar durch den Membrankanal 10 in dem Kanalelement 8 der Membran 3. Bei der Öffnung 9 tritt die Trübe dann in die Filterkammer 4 ein. Die Abdichtung des Kanäle 10 und 12, welche die Trübe führen, sowie die Abdichtung zwischen diesen Kanälen 10 und 12 einerseits und der Pressmittelkammer 5 andererseits findet dabei innerhalb des Randes der Filterplatten 1 und 2 statt.

### BEZUGSZEICHENLISTE

- 1: erste Filterplatte
- 2: zweite Filterplatte
- 3: Membran
- 4: Filterkammer
- 5: Pressmittelkammer
- 6: Pressfläche der Membran
- 7: Befestigungsmittel der Membran
- 8: Kanalelement der Membran
- 9: Öffnung der Membran
- 10: Membrankanal
- 11: Fläche des Kanalelements
- 12: Kanal des Anschlusselements
- 13: Anschlusselement
- 14: Mündungsöffnung
- 15: Dichtung
- 16: Einlaufeinheit
- 17: Filtertuch
- 18: Befestigungsplatte
- 19: Befestigungsschrauben
- 20: Stirnplatte der Filterplatte
- 21: erstes Rohstück
- 22: zweites Rohrstück

## Patentansprüche

1. Membran (3) für eine Membranfilterplatte (1) mit einer elastischen Pressfläche (6) und einem randseitigen Befestigungsmittel (7),
wobei in der Membran (3) eine Öffnung (9) für eine Fluidverbindung in eine Filterkammer (4) ausgebildet ist und
wobei die Membran (3) ein Kanalelement (8) aufweist, das sich aus der von der Membran (3) gebildeten Ebene (E) heraus erstreckt und in dem die Öffnung (9) ausgebildet ist,
**dadurch gekennzeichnet,**
**dass** das Kanalelement (8) einteilig mit der Pressfläche (6) und/oder dem Befestigungsmittel (7) ausgebildet ist.

2. Membran (3) nach Anspruch 1,
**dadurch gekennzeichnet,**
**dass** das Kanalelement (8) und die Pressfläche (6) und/oder das Befestigungsmittel (7) aus demselben Material bestehen.

3. Membran (3) nach Anspruch 1 oder 2,
**dadurch gekennzeichnet,**
**dass** das Kanalelement (8) im Randbereich der Membran (3) angeordnet ist.

4. Membran (3) nach Anspruch 1 oder 2,
**dadurch gekennzeichnet,**
**dass** das Kanalelement (8) hinsichtlich der von der Membran (3) gebildeten Ebene (E) gegenüberliegend von dem Befestigungsmittel (7) ausgebildet ist.

5. Membran (3) nach einem der Ansprüche 1 bis 4,
**dadurch gekennzeichnet,**
**dass** in dem Kanalelement (8) ein Membrankanal (10) gebildet ist, der in der Öffnung (9) mündet und durch den Flüssigkeit in die Filterkammer (4) hinein oder aus der Filterkammer (4) heraus leitbar ist.

6. Membran (3) nach einem der vorhergehenden Ansprüche,
**dadurch gekennzeichnet,**
**dass** die Membran (3) mehrere Öffnungen (9) und/oder mehrere Kanalelemente (8) für eine Fluidverbindung in die Filterkammer (4) aufweist.

7. Membranfilterplatte (1) mit einer Membran (3) nach einem der vorhergehenden Ansprüche.

8. Anordnung von zumindest zwei Filterplatten (1, 2), bei der
- eine Membran (3) nach einem der Ansprüche 1 bis 6 mittels dem randseitigen Befestigungsmittel (7) an der ersten Filterplatte (1) befestigt ist, so dass zwischen der Membran (3) und der ersten Filterplatte (1) eine Pressmittelkammer (5) gebildet ist,
- die zweite Filterplatte (2) an der ersten Filterplatte (1) so anliegt, dass zwischen der Pressfläche (6) der Membran (3) und der zweiten Filterplatte (2) eine Filterkammer (4) gebildet ist, und
- beim Rand der Filterplatten (1, 2) zwischen den Filterplatten (1, 2) ein Kanal (12) gebildet ist, der in Fluidverbindung mit der Öffnung (9) der Membran (3) steht, so dass von außen durch den Kanal (12) über die Öffnung (9) der Membran (3) Flüssigkeit in die Filterkammer (4) einleitbar ist oder von der Filterkammer (4) durch die Öffnung (9) der Membran (3) und den Kanal (12) Flüssigkeit aus der Filterkammer (4) heraus leitbar ist.

9. Anordnung nach Anspruch 8,
**dadurch gekennzeichnet,**
**dass** die Membran (3) ein Kanalelement (8) aufweist, in der die Öffnung (9) ausgebildet ist, und dass ein Anschlusselement (13) von dem Kanalelement (8) der Membran (3) aufgenommen ist, wobei das Anschlusselement (13) die Filterkammer (4) nicht begrenzt.

10. Anordnung nach Anspruch 9,
**dadurch gekennzeichnet,**
**dass** das Anschlusselement (13) gedichtet in dem Membrankanal (10) des Kanalelements (8) angeordnet ist.

11. Anordnung nach Anspruch 9 oder 10,
**dadurch gekennzeichnet,**
**dass** das Anschlusselement (13) eine Mündungsöffnung (14) bei den Schmalseiten der Filterplatten (1, 2) aufweist.

## Claims

1. A membrane (3) for a membrane filter plate (1), having an elastic compression face (6) and peripheral fastening means (7),
wherein an opening (9) for a fluid connection into a filter chamber (4) is formed in the membrane (3),
wherein the membrane (3) comprises a duct element (8) which extends from the plane (E) formed by the membrane (3) and in which the opening (9) is formed,
**characterized**
**in that** the duct element (8) is formed so as to be integral with the compression face (6) and/or the fastening means (7).

2. The membrane (3) as claimed in claim 1,
**characterized**
**in that** the duct element (8) and the compression face (6) and/or the fastening means (7) are composed of the same material.

3. The membrane (3) as claimed in claim 1 or 2,
**characterized**
**in that** the duct element (8) is disposed in the peripheral region of the membrane (3).

4. The membrane (3) as claimed in one of claims 1 or 2,
**characterized**
**in that** the duct element (8) is arranged so as to be opposite the fastening means (7) with respect to the plane (E) formed by the membrane (3).

5. The membrane (3) as claimed in one of claims 1 to 4,
**characterized**
**in that** a membrane duct (10) which opens out in the opening (9) and by way of which liquid is conductible into the filter chamber (4) or out of the filter chamber (4) is formed in the duct element (8).

6. The membrane (3) as claimed in one of the preceding claims,
**characterized**
**in that** the membrane (3) has a plurality of openings (9) and/or a plurality of duct elements (8) for a fluid connection into the filter chamber (4).

7. A membrane filter plate (1) having a membrane (3) as claimed in one of the preceding claims.

8. An arrangement of at least two filter plates (1, 2), in which
- one membrane (3) as claimed in one of claims 1 to 6 is fastened to the first filter plate (1) by means of the peripheral fastening means (7) such that a compression means chamber (5) is formed between the membrane (3) and the first filter plate (1),
- the second filter plate (2) bears on the first filter plate (1) such that a filter chamber (4) is formed between the compression face (6) of the membrane (3) and the second filter plate (2), and
- at the periphery of the filter plates (1, 2) a duct (12) is formed between the filter plates (1, 2), which duct (12) is in fluid connection with the opening (9) of the membrane (3), such that liquid is introducible into the filter chamber (4) from outside through the duct (12) via the opening (9) of the membrane (3), or, from the filter chamber (4) through the opening (9) of the membrane (3) and the duct (12), liquid is conductible out of the filter chamber (4).

9. The arrangement as claimed in claim 8,
**characterized**
**in that** the membrane (3) comprises a duct element (8) in which the opening (9) is formed, and in that a connection element (13) is received by the duct element (8) of the membrane (3), wherein the connection element (13) does not delimit the filter chamber (4).

10. The arrangement as claimed in claim 9,
**characterized**
**in that** the connection element (13) is disposed so as to be sealed in the membrane duct (10) of the duct element (8).

11. The arrangement as claimed in claim 9 or 10,
**characterized**
**in that** the connection element (13) comprises a mouth opening (14) at the narrow sides of the filter plates (1, 2).

## Revendications

1. Membrane (3) pour une plaque filtrante à membrane (1) comprenant une surface de pressage élastique (6) et un moyen de fixation marginal (7),
une ouverture (9) pour une connexion fluidique dans une chambre de filtre (4) étant réalisée dans la membrane (3) et
la membrane (3) présentant un élément de canal (8) qui s'étend hors du plan (E) formé par la membrane (3) et dans lequel est réalisée l'ouverture (9), **caractérisée en ce que**
l'élément de canal (8) est réalisé d'une seule pièce avec la surface de pressage (6) et/ou le moyen de fixation (7).

2. Membrane (3) selon la revendication 1,
**caractérisée en ce que**
l'élément de canal (8) et la surface de pressage (6) et/ou l'élément de fixation (7) se composent du même matériau.

3. Membrane (3) selon la revendication 1 ou 2,
**caractérisée en ce que**
l'élément de canal (8) est disposé dans la région marginale de la membrane (3).

4. Membrane (3) selon la revendication 1 ou 2,
**caractérisée en ce que**
l'élément de canal (8) est réalisé à l'opposé du moyen de fixation (7) par rapport au plan (E) formé par la membrane (3).

5. Membrane (3) selon l'une quelconque des revendications 1 à 4,
**caractérisée en ce**
**qu'**un canal de membrane (10) est formé dans l'élément de canal (8), lequel débouche dans l'ouverture (9) et à travers lequel du liquide peut être guidé dans la chambre de filtre (4) ou être ressorti de la chambre de filtre (4).

6. Membrane (3) selon l'une quelconque des revendications précédentes,
**caractérisée en ce que**
la membrane (3) présente plusieurs ouvertures (9) et/ou plusieurs éléments de canaux (8) pour une connexion fluidique dans la chambre de filtre (4).

7. Plaque filtrante à membrane (1) comprenant une membrane (3) selon l'une quelconque des revendications précédentes.

8. Agencement d'au moins deux plaques de filtre (1, 2), dans lequel :
- une membrane (3) selon l'une quelconque des revendications 1 à 6 est fixée à la première plaque de filtre (1) au moyen du moyen de fixation marginal (7) de telle sorte qu'entre la membrane (3) et la première plaque de filtre (1) soit formée une chambre de moyen de pressage (5),
- la deuxième plaque de filtre (2) s'applique contre la première plaque de filtre (1) de telle sorte qu'entre la surface de pressage (6) de la membrane (3) et la deuxième plaque de filtre (2) soit formée une chambre de filtre (4), et
- un canal (12) est formé au niveau du bord des plaques de filtre (1, 2) entre les plaques de filtre (1, 2), lequel est en liaison fluidique avec l'ouverture (9) de la membrane (3), de telle sorte que du liquide puisse être introduit dans la chambre de filtre (4) depuis l'extérieur à travers le canal (12) par le biais de l'ouverture (9) de la membrane (3) ou que du liquide puisse être guidé hors de la chambre de filtre (4) depuis la chambre de filtre (4) à travers l'ouverture (9) de la membrane (3) et à travers le canal (12).

9. Agencement selon la revendication 8,
**caractérisé en ce que**
la membrane (3) présente un élément de canal (8) dans lequel est réalisée l'ouverture (9), et **en ce qu'**un élément de raccordement (13) est reçu par l'élément de canal (8) de la membrane (3), l'élément de raccordement (13) ne limitant pas la chambre de filtre (4).

10. Agencement selon la revendication 9,
**caractérisé en ce que**
l'élément de raccordement (13) est disposé de manière hermétique dans le canal de membrane (10) de l'élément de canal (8).

11. Agencement selon la revendication 9 ou 10,
**caractérisé en ce que**
l'élément de raccordement (13) présente une ouverture d'embouchure (14) au niveau des petits côtés des plaques de filtre (1, 2).
